# EUROPEAN PATENT SPECIFICATION

(11) **EP 3 696 297 B1**
(45) Date of publication and mention of the grant of the patent: **25.11.2026**
(21) Application number: 18866937.8
(22) Date of filing: 11.10.2018
(51) Int. Cl.: C23C 26/00, C09D 5/00, C09D 5/16, C09D 183/04, C09D 183/08, C23C 28/00

(54) **SURFACE TREATMENT AGENT, METAL MATERIAL HAVING SURFACE-TREATED COATING FILM AND METHOD FOR PRODUCING SAME**
OBERFLÄCHENBEHANDLUNGSMITTEL, METALLMATERIAL MIT OBERFLÄCHENBEHANDELTEM BESCHICHTUNGSFILM UND VERFAHREN ZU SEINER HERSTELLUNG
AGENT DE TRAITEMENT DE SURFACE, MATÉRIAU MÉTALLIQUE AYANT UN FILM DE REVÊTEMENT TRAITÉ EN SURFACE ET SON PROCÉDÉ DE PRODUCTION

(30) Priority: 12.10.2017 JP 2017198170
(43) Date of publication of application: 19.08.2020
(73) Proprietor: Nihon Parkerizing Co., Ltd., Tokyo 103-0027 (JP)
(72) Inventor: UCHIDA, Junichi, Tokyo 103-0027 (JP); YOROZU, Takayuki, Tokyo 103-0027 (JP); KATSURAYA, Ryoko, Tokyo 103-0027 (JP)
(74) Representative: Hirons, Daniel Stuart
(86) International application number: PCT/JP2018/037847
(87) International publication number: WO 2019/074037

(56) References cited:
- WO-A1-2016/158519
- DE-T5- 112016 001 514
- JP-A- 2006 213 958
- JP-A- 2006 321 993
- US-A1- 2005 054 762

## Description

### TECHNICAL FIELD

The present invention relates to: a surface treatment agent that can be suitably used on metal materials of electronic components and microdevice components that are used in products such as automobiles, home electric appliances, office automation (OA) equipment, medical devices, and medical equipment; a method of producing a metal material including a surface-treated coating film using the surface treatment agent; and a metal material including a surface-treated coating film, which is obtained by the method.

### BACKGROUND ART

Metal materials are used in electronic components and microdevice components that constitute industrial products such as automobiles, home electric appliances, OA equipment, medical devices, and medical equipment. These industrial products are used in a variety of environments; therefore, the metal materials used in such industrial products are demanded to have various performances. Accordingly, in recent years, technologies have been developed for providing a surface-treated coating film having various performances on/over a surface of a metal material so as to impart the metal material with the various performances. For example, Patent Document 1 discloses a technology for forming a prescribed coating film by coating a metal surface with a metal material surface treatment composition, in which prescribed amounts of a prescribed phosphoric acid compound, a fluoro acid having a prescribed element such as titanium or zirconium, a silane coupling agent having at least one active hydrogen-containing amino group, and a silane coupling agent having at least one epoxy group are blended and thereby dissolved or dispersed, and subsequently drying the composition.

### RELATED ART DOCUMENT

### PATENT DOCUMENT

[Patent Document 1] Japanese Unexamined Patent Application Publication No. 2006-213958

### SUMMARY OF THE INVENTION

### PROBLEMS TO BE SOLVED BY THE INVENTION

In recent years, for those metal materials that are used in electronic components and microdevice components, it has been desired to develop a technology that enables to form a surface-treated coating film having excellent antifouling properties. Therefore, an object of the present invention is to provide: a surface treatment agent that is capable of forming a surface-treated coating film having excellent antifouling properties; a method of producing a metal material including a surface-treated coating film using the surface treatment agent; and a metal material including a surface-treated coating film, which is obtained by the method.

Document WO 2016/158519 A1 discloses a surface treatment agent similar to the present one, that does however not comprise an aromatic, hydrocarbon-based solvent.

### MEANS FOR SOLVING THE PROBLEMS

The present inventors studied intensively to solve the above-described problems and consequently discovered that a surface-treated coating film having excellent antifouling properties can be formed on/over a surface of a metal material by using a surface treatment agent that contains prescribed amounts of a silicone resin, a compound containing a prescribed metal element and an aromatic hydrocarbon-based solvent, thereby completing the present invention.

That is, the present invention encompasses, for example:
[1] A surface treatment agent, comprising:
   a silicone resin (A) having an organopolysiloxane structure containing plural siloxane bonds and in which an organic group is bound to silicon (Si);
   a compound (B) containing a metal element selected from the group consisting of titanium, platinum, rhodium and palladium; and
   an aromatic hydrocarbon-based solvent (C),
   wherein
      (I) a content of the silicone resin (A) is in a range of 90% by mass to 99.9% by mass with respect to a total solid mass of the silicone resin (A) and the compound (B), and
      (II) a ratio (B_{M}/A_{M}) of a mass (B_{M}) of the compound (B) to a mass (A_{M}) of the silicone resin (A) is in a range of 0.001 to 0.111; and
      (III) a content of the aromatic hydrocarbon-based solvent (C) is in a range of 40% by mass to 80% by mass with respect to a total mass of the surface treatment agent.
[2] The surface treatment agent according to [1], further comprising a vinyl group-containing silane coupling agent and/or an epoxy group-containing silane coupling agent, wherein a ratio (D_{M}/A_{M}) of a total mass (D_{M}) of the vinyl group-containing silane coupling agent and the epoxy group-containing silane coupling agent to the mass (A_{M}) is in a range of 0.005 to 0.251;
[3] A method of producing a metal material comprising a surface-treated coating film, the method including: the first step of contacting the surface treatment agent according to [1] or [2] on/over a surface of a metal material; and the second step of drying the surface treatment agent contacted with the metal material and thereby forming a surface-treated coating film;
[4] The method according to [3], further including, prior to the first step: the step of bringing a base treatment agent, comprising an amino group-containing silane coupling agent, a polymer of the silane coupling agent or a copolymer formed with the polymer, on/over the surface of the metal material; and the step of drying the base treatment agent contacted with the metal material and thereby forming a base coating;
[5] A metal material comprising a surface-treated coating film obtained by the method according to [3] or [4], wherein the surface-treated coating film has a film thickness in a range of 10 µm to 400 µm;
[6] A metal material comprising a surface-treated coating film obtained by the method according to [4], wherein the surface-treated coating film has a film thickness in a range of 10 µm to 400 µm, and a Si content in the base coating is in a range of 0.1 mg/m² to 50 mg/m² in terms of SiO₂ mass.
[7] The metal material comprising a surface-treated coating film according to [5] or [6], wherein the metal material is stainless steel.

### EFFECTS OF THE INVENTION

According to the present invention, a surface treatment agent that is capable of forming a surface-treated coating film having excellent antifouling properties, a method of producing a metal material including a surface-treated coating film using the surface treatment agent, and a metal material including a surface-treated coating film, which is obtained by the method, can be provided.

### EMBODIMENTS

The surface treatment agent according to the present invention, the metal material including a surface-treated coating film according to the present invention, and a method of producing the metal material will now be described.

### (Surface Treatment Agent)

The surface treatment agent according to the present embodiment contains: a silicone resin (A); a compound (B) containing a metal element selected from the group consisting of titanium, platinum, rhodium and palladium; and an aromatic hydrocarbon-based solvent (C). By using this surface treatment agent, a surface-treated coating film having excellent antifouling properties (particularly, contamination resistance in high-temperature environments) can be formed on a material to be treated, such as a metal material. The term "high temperature" used herein means a temperature of at least 100°C or higher, preferably 150°C or higher, more preferably 200°C or higher, particularly preferably 300°C or higher.

In this manner, the surface treatment agent according to the present embodiment is capable of forming a surface-treated coating film having excellent contamination resistance; therefore, the surface treatment agent according to the present embodiment is useful as an antifouling coating film-forming agent. Further, the resulting surface-treated coating film having excellent contamination resistance is useful for metal materials that are used in, for example, electronic components and microdevice components that constitute industrial products such as automobiles, home electric appliances, OA equipment, medical devices and medical equipment, as well as cooking utensils, ships, building materials and the like.

### <Silicone Resin (A)>

The silicone resin (A) is not particularly restricted as long as it has an organopolysiloxane structure which contains plural siloxane bonds and in which an organic group is bound to silicon (Si); however, the silicone resin (A) preferably has an organopolysiloxane structure which contains at least two or more organic groups bound to Si in one molecule. The position at which each organic group is bound is not particularly restricted, and each organic group may be bound to a main chain, a side chain, or a terminal. The silicone resin (A) may be a homopolymer having the above-described organopolysiloxane structure, a mixture of a homopolymer having the above-described organopolysiloxane structure and a homopolymer having a polysiloxane structure, or a copolymer (a block copolymer or a graft polymer) that has the above-described organopolysiloxane structure and a polysiloxane structure. Further, the silicone resin (A) may be of an addition type or a condensation type. Moreover, the silicone resin (A) may be any of a thermosetting type, a room temperature-curable type (RTV), and a UV-curable type.

Examples of the organic group bound to Si in the organopolysiloxane structure include, but not limited to, saturated hydrocarbon groups, unsaturated hydrocarbon groups, halogenated alkyl groups, and an epoxycyclohexyl group. Examples of the saturated hydrocarbon groups include, but not limited to, linear or branched alkyl groups and cycloalkyl groups. Examples of the unsaturated hydrocarbon groups include, but not limited to, linear or branched alkenyl groups, cycloalkenyl groups, cycloalkenylalkyl groups, and aryl groups. The organic group bound to Si is preferably an unsaturated hydrocarbon group, more preferably an alkenyl group, particularly preferably a vinyl group or a hexenyl group.

Examples of the halogenated alkyl groups include a chloromethyl group, a 3-chloropropyl group, a 1-chloro-2-methylpropyl group, and a 3,3,3-trifluoropropyl group. Examples of the alkyl groups include a methyl group, an ethyl group, a propyl group, a butyl group, a pentyl group, a hexyl group, a heptyl group, an octyl group, a nonyl group, and a decyl group. Examples of the cycloalkyl groups include a cyclopentyl group and a cyclohexyl group. Examples of the linear or branched alkenyl groups include a vinyl group, a 1-propenyl group, an allyl group, an isopropenyl group, a 1-butenyl group, a 2-butenyl group, a pentenyl group, and a hexenyl group. Examples of the cycloalkenyl groups include a cyclopentenyl group and a cyclohexenyl group. Examples of the cycloalkenylalkyl groups include a cyclopentenylethyl group, a cyclohexenylethyl group, and cyclohexenylpropyl group. Examples of the aryl groups include a phenyl group.

The polysiloxane structure is not particularly restricted as long as it is different from the above-described organopolysiloxane structure, and examples thereof include a polysiloxane structure that contains at least two or more hydrogen atoms bound to Si in one molecule, and a polysiloxane structure that contains at least two or more alkoxy groups bound to Si in one molecule. Examples of the alkoxy groups include a methoxy group, an ethoxy group, a propoxy group, and a butoxy group. The alkoxy groups may each be linear or branched.

In the preparation of the surface treatment agent, the above-described various silicone resins may be used singly, or in combination of two or more thereof. One example of a preferred embodiment of the silicone resin (A) is a mixture of a polymer having an organopolysiloxane structure that contains at least two or more unsaturated hydrocarbon groups bound to Si in one molecule and a polymer having a polysiloxane structure that contains at least two or more hydrogen atoms bound to Si in one molecule.

Examples of the polymer having an organopolysiloxane structure that contains at least two or more unsaturated hydrocarbon groups bound to Si in one molecule include a dimethyl polysiloxane having a dimethylvinyl siloxy group at each of both terminals of its molecular chain, a dimethyl siloxane-methylphenyl siloxane copolymer having a dimethylvinylsiloxy group at each of both terminals of its molecular chain, a dimethyl siloxane-methylvinyl siloxane copolymer having a dimethylvinylsiloxy group at each of both terminals of its molecular chain, a dimethyl siloxane-methylvinyl siloxane copolymer having a trimethylsiloxy group at each of both terminals of its molecular chain, a dimethyl siloxane-methylvinyl siloxane-methylphenyl siloxane ternary copolymer having a trimethylsiloxy group at each of both terminals of its molecular chain, a dimethyl siloxane-methylvinyl siloxane copolymer having a silanol group at each of both terminals of its molecular chain, and a methylvinyl polysiloxane having a silanol group at each of both terminals of its molecular chain, as well as polymers in which some of the methyl groups of various homopolymers, copolymers and ternary copolymers are substituted with: alkyl groups other than a methyl group, such as an ethyl group and a propyl group; or halogenated alkyl groups, such as a 3,3,3-trifluoropropyl group and a 3,3,3-trichloropropyl group. A mixture of two or more selected from the above-described homopolymers, copolymers and ternary copolymers may be used for the preparation of the surface treatment agent.

The polymer having a polysiloxane structure that contains at least two or more hydrogen atoms bound to Si in one molecule is not particularly restricted, and examples thereof include organohydrogen polysiloxanes having a linear, cyclic, branched or three-dimensional network structure which contains at least two or more SiH groups, in each of which a hydrogen atom is bound to Si, in one molecule and has repeating diorganosiloxane units as a main chain and whose molecular chains are capped with triorganosiloxy groups at both terminals. More specific examples include a methyl hydrogen polysiloxane having a trimethylsiloxy group at each of both terminals of its molecular chain, a dimethyl siloxane-methyl hydrogen siloxane copolymer having a trimethylsiloxy group at each of both terminals of its molecular chain, a methyl hydrogen polysiloxane having a silanol group at each of both terminals of its molecular chain, a dimethyl siloxane-methyl hydrogen siloxane copolymer having a silanol group at each of both terminals of its molecular chain, a dimethyl polysiloxane having a dimethyl hydrogen siloxy group at each of both terminals of its molecular chain, a methyl hydrogen polysiloxane having a dimethyl hydrogen siloxy group at each of both terminals of its molecular chain, and a dimethyl siloxane-methyl hydrogen siloxane copolymer having a dimethyl hydrogen siloxy group at each of both terminals of its molecular chain. A mixture of two or more selected from the above-described homopolymers and copolymers may be used for the preparation of the surface treatment agent.

The weight-average molecular weight of the silicone resin (A) is not particularly restricted; however, it is usually in a range of 6,000 to 45,000, preferably in a range of 6,500 to 40,000. The weight-average molecular weight is a value measured by GPC (gel permeation chromatography) in terms of polystyrene.

### <Compound (B)>

The compound (B) is not particularly restricted as long as it is a compound that contains a metal element selected from titanium, platinum, rhodium and palladium. Examples of a compound containing titanium include titanyl sulfate, titanyl nitrate, titanium nitrate, titanyl chloride, titanium chloride, titania sol, titanium oxide, titanium potassium oxalate, titanium lactate, titanium tetraisopropoxide, titanium acetylacetonate, diisopropyl titanium bis-acetylacetone, and titanium diisopropoxy-bis(acetylacetonate). Thereamong, it is preferred to use titanium tetraisopropoxide or titanium acetylacetonate.

Examples of a compound containing platinum, rhodium or palladium include simple metals of platinum group, such as platinum (including platinum black), rhodium, and palladium; platinum chloride, chloroplatinic acid and chloroplatinates, such as H₂PtCl₄·nH₂O, H₂PtCl₆·nH₂O, NaHPtCl₆·nH₂O, KHPtCl₆·nH₂O, Na₂PtCl₆·nH₂O, K₂PtCl₄·nH₂O, PtCl₄·nH₂O, PtCl₂, and Na₂HPtCl₄·nH₂O (wherein, n is an integer of 0 to 6, preferably 0 or 6); alcohol-modified chloroplatinic acid (reaction product of an alcohol and chloroplatinic acid); complexes of chloroplatinic acid with olefins; compounds in which a platinum-group metal, such as platinum black or palladium, is supported on a carrier such as alumina, silica or carbon; rhodium-olefin complexes; chlorotris(triphenyl phosphine)rhodium (Wilkinson's catalyst); complexes of platinum chloride, chloroplatinic acid or a chloroplatinate with vinyl-containing siloxane; and compounds in which platinum chloride is supported on a polystyrene-polyethylene glycol.

In the preparation of the surface treatment agent, these compounds may be used singly, or in combination of two or more thereof.

The content of the silicone resin (A) (which means a total content when plural silicone resins are used) is in a range of 90% by mass to 99.9% by mass, preferably in a range of 95% by mass to 99.8% by mass, more preferably in a range of 98% by mass to 99.7% by mass, with respect to a total solid mass of the silicone resin (A) and the compound (B).

In the surface treatment agent, a ratio (B_{M}/A_{M}) of the mass (B_{M}) of the compound (B) [which means a total mass when plural compounds are used] to the mass (A_{M}) of the silicone resin (A) [which means a total mass when plural silicone resins are used] is in a range of 0.001 to 0.111, preferably in a range of 0.002 to 0.053, particularly preferably in a range of 0.003 to 0.02.

### <Aromatic Hydrocarbon-Based Solvent (C)>

The aromatic hydrocarbon-based solvent (C) is a hydrocarbon constituted by, as a unit, a single ring or plural planar rings that is/are composed of six carbon atoms with alternating single and double bonds and delocalized electrons, and the type of the hydrocarbon is not particularly restricted.

The aromatic hydrocarbon-based solvent (C) is not particularly restricted as long as it contains the above-described unit; however, the aromatic hydrocarbon-based solvent (C) has a solubility parameter (SP) value in a range of preferably 8.5 to 9.5, more preferably 8.8 to 9.3. More specific examples of the aromatic hydrocarbon-based solvent (C) include benzene, toluene, o-xylene, p-xylene, m-xylene, *para-xylene,* and *ortho-xylene.* In the preparation of the surface treatment agent, these aromatic hydrocarbon-based solvents (C) may be used singly, or in combination of two or more thereof.

In the surface treatment agent, the content of the aromatic hydrocarbon-based solvent (C) is in a range of 40% by mass to 80% by mass, preferably in a range of 50% by mass to 80% by mass, more preferably in a range of 60% by mass to 75% by mass, in terms of mass ratio (with respect to a total mass of the surface treatment agent).

### <Other Additives>

The surface treatment agent according to the present embodiment may also contain various additives as required. Examples of the additives include, but not limited to, a surfactant, an antifoaming agent, a leveling agent, a thickening agent, an antibacterial and antifungal agent, a colorant, a fluorine resin. These additives may be added within a range that does not impair the effects of the present invention, and the content of the additives is at most several % by mass with respect to the mass of the surface treatment agent.

### <Silane Coupling Agent (D)>

As other additive(s), a vinyl group-containing silane coupling agent and/or an epoxy group-containing silane coupling agent [hereinafter, simply referred to as "silane coupling agent (D)"] can also be incorporated into the surface treatment agent.

The silane coupling agent (D) is not particularly restricted as long as it is a silane coupling agent that contains a vinyl group or an epoxy group, and examples thereof include vinyl group-containing silane coupling agents, such as vinyltrimethoxysilane, vinyltriethoxysilane, and p-styryltrimethoxysilane; and epoxy group-containing silane coupling agents, such as 3-glycidoxypropyltrimethoxysilane, 3-glycidoxypropylmethyldimethoxysilane, and 2-(3,4-epoxycyclohexyl)ethyltrimethoxysilane. When an epoxy group-containing silane coupling agent is used by itself or in combination with a vinyl group-containing silane coupling agent, it is preferred to use a silane coupling agent having a single epoxy group as the epoxy group-containing silane coupling agent.

When the silane coupling agent (D) is used in the preparation of the surface treatment agent, a ratio (D_{M}/A_{M}) of the mass (D_{M}) of the silane coupling agent (D) [which means a total mass when plural silane coupling agents are used] to the mass (A_{M}) of the silicone resin (A) [which means a total mass when plural silicone resins are used] is preferably in a range of 0.005 to 0.251, more preferably in a range of 0.01 to 0.11; however, the ratio (D_{M}/A_{M}) is not restricted to be in this range.

### (Method of Producing Surface Treatment Agent)

The surface treatment agent according to the present embodiment can be produced by mixing the silicone resin (A), the compound (B) containing a metal element selected from titanium, platinum, rhodium and palladium, and the aromatic hydrocarbon-based solvent (C) along with, as required, additives such as the silane coupling agent (D). In the case of using the surface treatment agent according to the present embodiment for the below-described surface treatment, the viscosity of the surface treatment agent at 25°C is preferably in a range of 1 Pa·s to 20 Pa·s, more preferably in a range of 3 Pa·s to 15 Pa·s, particularly preferably in a range of 5 Pa·s to 10 Pa·s. The viscosity of the surface treatment agent can be measured using a vibration-type viscometer (VM Series, manufactured by Sekonic Corporation).

### (Metal Material Including Surface-Treated Coating Film and Production Method Thereof)

The method of producing a metal material including a surface-treated coating film according to the present embodiment includes: the first step of bringing the above-described surface treatment agent on/over a surface of a metal material; and the second step of drying the surface treatment agent contacted with the metal material and thereby forming a surface-treated coating film. By performing these steps, a metal material including a surface-treated coating film can be produced. Between the metal material and the surface-treated coating film, the metal material may further have a passivation film and/or an oxide film of the metal contained in the metal material; however, the metal material is not required to have these films.

Prior to the first step, a pretreatment may be performed on the metal material for the purpose of removing oil and dirt adhering to the surface of the metal material. A method for this pretreatment is not particularly restricted, and examples thereof include hot-water washing, solvent washing, and alkali degreasing.

As a contact method employed in the first step, a variety of contact methods can be employed, and an optimum method can be selected as appropriate in accordance with, for example, the shape of the metal material to be treated. Specific examples thereof include coating methods, such as an immersion treatment method, a spray treatment method, a pouring method, a roll coating method, and a bar coating method; and coating methods using one or more coating apparatuses, such as a spin coater, a slit coater, a die coater, a blade coater, and a dispenser, and it is preferred to employ a coating method using a disperser by which a prescribed amount of the surface treatment agent can be applied in a stable manner.

The drying temperature in the second step is not particularly restricted; however, it is preferably in a range of 40 to 250°C, more preferably in a range of 60 to 180°C. A drying method is not particularly restricted, and examples thereof include a method of drying the surface treatment agent contacted with the metal material by heating the surface treatment agent using a hot-air or induction heater, or with infrared ray, near-infrared ray or the like. The drying time is also not particularly restricted, and optimum conditions can be set as appropriate in accordance with, for example, the types of the materials to be used, and the amount of the surface treatment agent adhering to the surface of the metal material.

The method of producing a metal material including a surface-treated coating film according to the present embodiment may further include, prior to the first step (after a pretreatment if any pretreatment is performed): the third step of bringing a base treatment agent, which contains an amino group-containing silane coupling agent, a polymer of the silane coupling agent or a copolymer formed with the polymer, on/over the surface of the metal material; and the fourth step of drying the base treatment agent contacted with the metal material and thereby forming a base coating. By performing the first and the second steps after performing the third and the fourth steps in this manner, a metal material having both a surface-treated coating film and a base coating can be produced. Between the metal material and the base coating, the metal material may further have a passivation film and/or an oxide film of the metal contained in the metal material; however, the metal material is not required to have these films.

The base treatment agent contains, for example, an amino group-containing silane coupling agent, a polymer of the silane coupling agent, a copolymer formed with the polymer etc. The amino group-containing silane coupling agent is not particularly restricted as long as it contains one amino group, and examples thereof include *N*-(2-aminoethyl)-3-aminopropylmethyldimethoxysilane, *N*-(2-aminoethyl)-3-aminopropyltrimethoxysilane, and 3-aminopropyltriethoxysilane.

A solvent contained in the base treatment agent is not particularly restricted, and examples thereof include organic solvents, such as alcohols, acetone, acetonitrile, benzene, cyclohexane, methyl acetate, ethyl acetate, and methyl ethyl ketone; and mixtures of these organic solvents and water. As an organic solvent, an alcohol having not more than 5 carbon atoms is preferred. When the solvent is a mixture of an organic solvent and water, the mass ratio of water contained in the mixture is preferably less than 5% by mass. Further, the base treatment agent may also contain additives, such as a leveling agent used for improving the wettability with the metal material, a film-forming aid used for improving the film-forming properties, an organic or inorganic crosslinking agent used for obtaining a more rigid base coating, an antifoaming agent used for suppressing foam formation, a thickening agent used for controlling the viscosity, and a rust inhibitor. These additives may be incorporated within a range that does not impair the effects of the present invention.

In the base treatment agent, a total content of the amino group-containing silane coupling agent, the polymer of the silane coupling agent, the copolymer formed with the polymer etc. is not particularly restricted; however, it is preferably in a range of 0.1% by mass to 10% by mass, more preferably in a range of 0.5% by mass to 5% by mass, with respect to a total amount of the base treatment agent.

As a contact method employed in the third step, a variety of contact methods can be employed, and an optimum method can be selected as appropriate in accordance with, for example, the shape of the metal material. Specific examples thereof include the above-described coating methods using a coating apparatus(es), as well as an immersion treatment method, a spray treatment method, a pouring method, a roll coating method, and a bar coating method; however, the contact method is not restricted to these methods. Further, examples of a drying method employed in the fourth step include a method of heat-drying the base treatment agent using a hot-air or induction heater, or with infrared ray, near-infrared ray or the like, and a method of drying the base treatment agent by vacuum distillation; however, the drying method is not restricted to these methods. The drying temperature is not particularly restricted; however, it is preferably in a range of 40 to 250°C, more preferably in a range of 60 to 180°C. Further, the drying time is also not particularly restricted, and optimum conditions can be set as appropriate in accordance with, for example, the types of the materials to be used, and the amount of the base treatment agent adhering to the surface of the metal material.

### <Metal Material>

The metal material is not particularly restricted, and examples thereof include iron-based metal materials, zinc-plated metal materials, aluminum-based metal materials, magnesium-based metal materials, nickel-based metal materials, titanium-based metal materials, zirconium-based metal materials, copper-based metal materials, tin-based metal materials, tungsten-based metal materials, chromium-based metal materials, manganese-based metal materials, molybdenum-based metal materials, and cobalt-based metal materials; however, the metal material is more preferably a stainless-steel material used in an electronic component, a microdevice component or the like. In the present specification, the material to which the surface treatment agent has been applied is described referring to a metal material as an example; however, the material to which the surface treatment agent according to the present embodiment has been applied is not restricted to be a metal material, and the surface treatment agent may be applied to any material as long as it requires an antifouling coating film.

### (Metal Material Including Surface-Treated Coating Film)

The metal material including a surface-treated coating film according to the present embodiment has the surface-treated coating film on/over the surface of the metal material. This surface-treated coating film contains the silicone resin (A) and the compound (B). The content of the silicone resin (A) is in a range of 90% by mass to 99.9% by mass with respect to a total solid mass of the silicone resin (A) and the compound (B). Further, a ratio (B_{M}/A_{M}) of the mass (B_{M}) of the compound (B) to the mass (A_{M}) of the silicone resin (A) is in a range of 0.001 to 0.111. The surface-treated coating film may further contain the above-described additive(s), such as a vinyl group-containing silane coupling agent and an epoxy group-containing silane coupling agent.

The metal material including a surface-treated coating film according to the present embodiment may also have the above-described base coating between the metal material and the surface-treated coating film. In this base coating, for example, an amino group-containing silane coupling agent, a polymer of the silane coupling agent, a copolymer formed with the polymer etc. are contained. When the above-described additive(s) is/are incorporated into the base treatment agent forming the base coating, the base coating may further contain the additive(s).

The above-described metal material including a surface-treated coating film is produced by the above-described production method. The thickness of the surface-treated coating film is not particularly restricted; however, it is preferably in a range of 10 µm to 400 µm, more preferably in a range of 20 µm to 300 µm, on each side.

As for the amount of the base coating, the Si content in the base coating is preferably in a range of 0.1 mg/m² to 50 mg/m², more preferably in a range of 1 mg/m² to 40 mg/m², in terms of SiO₂ mass. The amount of the base coating can be determined by analyzing the base coating by a fluorescent X-ray method and calculating the mass in terms of SiO₂ from the Si intensity.

### EXAMPLES

The actions and effects of the present invention will now be described concretely by way of Examples. It is noted here, however, that the below-described Examples do not limit the present invention.

### (1) Test Materials (Raw Materials)

The following commercially available materials were used as test materials.
(M1) cold-rolled steel sheet SPCC-SD: sheet thickness = 0.8 mm
(M2) stainless steel SUS304: sheet thickness = 0.8 mm

### (2) Pretreatment (Alkali Degreasing)

The surfaces of the test materials were subjected to a degreasing treatment in which the test materials were immersed in a 2% aqueous solution of an alkali degreasing agent (FINE CLEANER E6406, manufactured by Nihon Parkerizing Co., Ltd.) at 60°C for 30 seconds, whereby oil and dirt were removed from the surfaces. Subsequently, the thus pretreated test materials were washed with tap water, and pure water was further poured over the test materials, after which the surfaces of the test materials were dried at 100°C.

### (3) Preparation of Surface Treatment Agents

The components shown in Table 1 were mixed at the respective prescribed mass ratios to prepare surface treatment agents of Examples 1 to 23 and Comparative Examples 1 to 5. Example 17 is also a comparative example. Further, in order to adjust the viscosity of each of the thus prepared surface treatment agents to be 7.0, a vapor-phase silica (fumed silica; AEROSIL R974, manufactured by Nippon Aerosil Co., Ltd.) was added as a thickening agent. The viscosity was adjusted using a vibration-type viscometer (VM Series, manufactured by Sekonic Corporation) at 25°C. In Table 1, the values in the columns of "% by mass" under "Silicone resin (A)", "Compound (B)" and "Silane coupling agent (D)" each indicate the mass ratio of each component with respect to a total mass of these components. Further, in Table 1, the values in the column of "% by mass" under "Aromatic hydrocarbon-based solvent (C)" each indicate the mass ratio of the aromatic hydrocarbon-based solvent (C) with respect to a total mass of the corresponding surface treatment agent. In Table 1, "B_{M}/A_{M}" represents a ratio of the total mass (B_{M}) of the compound (B) to the total mass (A_{M}) of the silicone resin (A). Moreover, in Table 1, "D_{M}/A_{M}" represents a ratio of the total mass (D_{M}) of the silane coupling agent (D) to the total mass (A_{M}) of the silicone resin (A). Tables 2 to 5 show the types of the respective components shown in Table 1.

**[Table 1]**

| Table 1: Formulation of Surface Treatment Agent | | | | | | | | | | |
|---|---|---|---|---|---|---|---|---|---|---|
| Example/ Comparative Example | Surface treatment agent | | | | | | | | | |
| | Silicone resin (A) | | Compound (B) | | Aromatic hydrocarbon-based solvent (C) | | Silane coupling agent (D) | | Mass ratio | Mass ratio |
| | Type | % by mass | Type | % by mass | Type | % by mass | Type | % by mass | B_{M}/A_{M} | D_{M}/A_{M} |
| Example 1 | A2 | 90.0% | B1 | 10.0% | C1 | 70.0% | | | 0.111 | - |
| Example 2 | A2 | 95.0% | B1 | 5.0% | C1 | 70.0% | | | 0.053 | - |
| Example 3 | A2 | 98.0% | B1 | 2.0% | C1 | 70.0% | | | 0.020 | - |
| Example 4 | A2 | 99.6% | B1 | 0.4% | C1 | 70.0% | | | 0.004 | - |
| Example 5 | A2 | 99.7% | B1 | 0.3% | C1 | 70.0% | | | 0.003 | - |
| Example 6 | A2 | 99.8% | B1 | 0.2% | C1 | 70.0% | | | 0.002 | - |
| Example 7 | A2 | 99.9% | B1 | 0.1% | C1 | 70.0% | | | 0.001 | - |
| Example 8 | A1 | 99.6% | B1 | 0.4% | C1 | 70.0% | | | 0.004 | - |
| Example 9 | A3 | 99.6% | B1 | 0.4% | C1 | 70.0% | | | 0.004 | - |
| Example 10 | A2 | 99.6% | B2 | 0.4% | C1 | 70.0% | | | 0.004 | - |
| Example 11 | A2 | 99.6% | B2 | 0.4% | C2 | 70.0% | | | 0.004 | - |
| Example 12 | A2 | 99.6% | B1 | 0.4% | C1 | 40.0% | | | 0.004 | - |
| Example 13 | A2 | 99.6% | B1 | 0.4% | C1 | 50.0% | | | 0.004 | - |
| Example 14 | A2 | 99.6% | B1 | 0.4% | C1 | 60.0% | | | 0.004 | - |
| Example 15 | A2 | 99.6% | B1 | 0.4% | C1 | 75.0% | | | 0.004 | - |
| Example 16 | A2 | 99.6% | B1 | 0.4% | C1 | 80.0% | | | 0.004 | - |
| Example 17 | A2 | 99.6% | B1 | 0.4% | C1 | 90.0% | | | 0.004 | - |
| Example 18 | A2 | 99.1% | B2 | 0.4% | C1 | 70.0% | D1 | 0.5% | 0.004 | 0.005 |
| Example 19 | A2 | 98.6% | B2 | 0.4% | C1 | 70.0% | D1 | 1.0% | 0.004 | 0.010 |
| Example 20 | A2 | 96.6% | B2 | 0.4% | C1 | 70.0% | D1 | 3.0% | 0.004 | 0.031 |
| Example 21 | A2 | 89.6% | B2 | 0.4% | C1 | 70.0% | D1 | 10.0% | 0.004 | 0.112 |
| Example 22 | A2 | 79.6% | B2 | 0.4% | C1 | 70.0% | D1 | 20.0% | 0.005 | 0.251 |
| Example 23 | A2 | 96.6% | B2 | 0.4% | C1 | 70.0% | D2 | 3.0% | 0.004 | 0.031 |
| Comparative Example 1 | A2 | 80.0% | B1 | 20.0% | C1 | 70.0% | | | 0.250 | - |
| Comparative Example 2 | A2 | 100.0% | | | C1 | 70.0% | | | | - |
| Comparative Example 3 | | | B2 | 100.0% | C1 | 70.0% | | | | - |
| Comparative Example 4 | A2 | 99.6% | B1 | 0.4% | C1 | 30.0% | | | 0.004 | - |
| Comparative Example 5 | A2 | 99.6% | B1 | 0.4% | C1 | 95.0% | | | 0.004 | - |

### [Table 2]

**Table 2**

| Symbol | Silicone resin (A) |
|---|---|
| A1 | Epoxy resin-based silicone resin (product name: ES-1002T, manufactured by Shin-Etsu Chemical Co., Ltd.) |
| A2 | Mixture of a polydimethylsiloxane having a dimethylvinylsiloxane group at each of both terminals of its molecular chain and a methyl hydrogen siloxane-dimethyl siloxane copolymer having a trimethylsilyl group at each of both terminals of its molecular chain (product name: KR-165, manufactured by Shin-Etsu Chemical Co., Ltd.) |
| A3 | Polyester resin-based silicone resin (product name: KR-5230, manufactured by Shin-Etsu Chemical Co., Ltd.) |

### [Table 3]

**Table 3**

| Symbol | Compound (B) |
|---|---|
| B1 | H₂PtCl₄·nH₂O (product name: D-168, manufactured by Shin-Etsu Chemical Co., Ltd.) |
| B2 | Ti(C₃H₇O)₂(C₅H₇O₂)₂ (product name: ORGATIX TC-100, manufactured by Matsumoto Fine Chemical Co., Ltd.) |

### [Table 4]

**Table 4**

| Symbol | Aromatic hydrocarbon-based solvent (C) |
|---|---|
| C1 | Xylene (SP value : 8.9) |
| C2 | Benzene (SP value : 9.2) |

### [Table 5]

**Table 5**

| Symbol | Silane coupling agent (D) |
|---|---|
| D1 | Vinyltrimethoxysilane (product name: KBM-1003, manufactured by Shin-Etsu Chemical Co., Ltd.) |
| D2 | 3-glycidoxypropyltrimethoxysilane (product name: KBM-403, manufactured by Shin-Etsu Chemical Co., Ltd.) |

### (4) Metal Materials Having Surface-Treated Coating Film

As shown in Table 6, various surface treatment agents were contacted with the surfaces of the pretreated test materials. Subsequently, without washing the test materials with water, the surface treatment agents contacted with the test materials were dried at the respective drying temperatures shown in Table 6 to produce test materials (test sheets) each having a surface-treated coating film of a prescribed thickness. Further, with regard to No. 35 to 39 shown in Table 6, the pretreated test materials, before a surface treatment agent was contacted therewith, were immersed in a base treatment agent that contained the amino group-containing silane coupling agent shown in Table 6 at 25°C, whereby a base coating was formed on the surface of each test material. It is noted here that 2-propanol was used as a solvent for the preparation of the base treatment agent. The mass concentration of the base treatment agent and the immersion time were adjusted as appropriate such that the Si content in the resulting base coating in terms of SiO₂ mass would be the respective values shown in Table 6. The type of "Amino group-containing silane coupling agent in base treatment agent" and the types of "Contact method" used for each surface treatment agent, which are shown in Table 6, are described in Tables 7 and 8, respectively.

**[Table 6]**

| Table 6: Production of Test Sheet | | | | | | | |
|---|---|---|---|---|---|---|---|
| Test Sheet | Steel sheet | Base coating-forming step | | Surface-treated coating film-forming step | | | |
| | | Amino group-containing silane coupling agent in base treatment agent | Si content | Surface treatment agent | Contact method | Drying temperature | Film thickness |
| | | | mg/m² | | | °C | µm |
| No.1 | M2 | | | Example1 | T1 | 150 | 100 |
| No.2 | M2 | | | Example2 | T1 | 150 | 100 |
| No.3 | M2 | | | Example3 | T1 | 150 | 100 |
| No.4 | M2 | | | Example4 | T1 | 150 | 100 |
| No.5 | M2 | | | Example5 | T1 | 150 | 100 |
| No.6 | M2 | | | Example6 | T1 | 150 | 100 |
| No.7 | M2 | | | Example7 | T1 | 150 | 100 |
| No.8 | M2 | | | Example8 | T1 | 150 | 100 |
| No.9 | M2 | | | Example9 | T1 | 150 | 100 |
| No.10 | M2 | | | Example10 | T1 | 150 | 100 |
| No.11 | M2 | | | Example11 | T1 | 150 | 100 |
| No.12 | M2 | | | Example12 | T1 | 150 | 100 |
| No.13 | M2 | | | Example13 | T1 | 150 | 100 |
| No.14 | M2 | | | Example14 | T1 | 150 | 100 |
| No.15 | M2 | | | Example15 | T1 | 150 | 100 |
| No.16 | M2 | | | Example16 | T1 | 150 | 100 |
| No.17 | M2 | | | Example17 | T1 | 150 | 100 |
| No.18 | M2 | | | Example18 | T1 | 150 | 100 |
| No.19 | M2 | | | Example19 | T1 | 150 | 100 |
| No.20 | M2 | | | Example20 | T1 | 150 | 100 |
| No.21 | M2 | | | Example21 | T1 | 150 | 100 |
| No.22 | M2 | | | Example22 | T1 | 150 | 100 |
| No.23 | M2 | | | Example23 | T1 | 150 | 100 |
| No.24 | M1 | | | Example4 | T1 | 150 | 100 |
| No.25 | M2 | | | Example4 | T1 | 150 | 10 |
| No.26 | M2 | | | Example4 | T1 | 150 | 20 |
| No.27 | M2 | | | Example4 | T1 | 150 | 300 |
| No.28 | M2 | | | Example4 | T1 | 150 | 400 |
| No.29 | M2 | | | Example4 | T1 | 40 | 100 |
| No.30 | M2 | | | Example4 | T1 | 60 | 100 |
| No.31 | M2 | | | Example4 | T1 | 180 | 100 |
| No.32 | M2 | | | Example4 | T1 | 250 | 100 |
| No.33 | M2 | | | Example4 | T1 | 150 | 100 |
| No.34 | M2 | | | Example4 | T2 | 150 | 100 |
| No.35 | M2 | S1 | 0.1 | Example4 | T1 | 150 | 100 |
| No.36 | M2 | S1 | 1 | Example4 | T1 | 150 | 100 |
| No.37 | M2 | S1 | 10 | Example4 | T1 | 150 | 100 |
| No.38 | M2 | S1 | 40 | Example4 | T1 | 150 | 100 |
| No.39 | M2 | S1 | 50 | Example4 | T1 | 150 | 100 |
| No.40 | M2 | | | Comparative Example1 | T1 | 150 | 100 |
| No.41 | M2 | | | Comparative Example2 | T1 | 150 | 100 |
| No.42 | M2 | | | Comparative Example3 | T1 | 150 | 100 |
| No.43 | M2 | | | Comparative Example4 | T1 | 150 | 100 |
| No.44 | M2 | | | Comparative Example5 | T1 | 150 | 100 |

### [Table 7]

**Table 7**

| Symbol | Amino group-containing silane coupling agent |
|---|---|
| S1 | 3-aminopropyltriethoxysilane (product name: KBE-903, manufactured by Shin-Etsu Chemical Co., Ltd.) |

### [Table 8]

**Table 8**

| Symbol | Contact method |
|---|---|
| T1 | Dispenser (desktop-type robot) (product name: ML-808GX, SM4000 MEGAX-3A-SS, manufactured by Musashi Engineering, Inc.) |
| T2 | Immersion method |

### (5) Evaluation Tests

For each test sheet, the following evaluation tests were conducted. The results of the evaluation tests are shown in Table 9. From a practical standpoint, the test sheets without "D" in any of the evaluated items shown in Table 9 were regarded as satisfactory.

### Insulation Test after Heating

The test sheets (No. 1 to 44) were each cut into a size of 70 mm × 150 mm, subsequently heated in an oven at 300°C for 24 hours, and then left to stand at room temperature (25°C) for 24 hours. Thereafter, in accordance with JIS C2110-1:2016, a voltage was applied to each test sheet at a voltage increase rate of 10 V/s, and the maximum voltage with which each test sheet was electrified was measured to evaluate the post-heating insulation based on the following evaluation criteria.

### (Evaluation Criteria)

S: The maximum voltage was 1,000 V or higher.
A: The maximum voltage was 500 V or higher but lower than 1,000 V.
B: The maximum voltage was 300 V or higher but lower than 500 V.
C: The maximum voltage was 200 V or higher but lower than 300 V.
D: The maximum voltage was lower than 200 V.

### Adhesion Test after Heating

The test sheets were each cut into a size of 70 mm × 150 mm, subsequently heated in an oven at 300°C for 24 hours, and then left to stand at room temperature (25°C) for 24 hours. Next, on each test sheet, 11 cuts were made at 1-mm intervals both in the lengthwise and the widthwise directions to form a grid (10 × 10 = 100 cells). Thereafter, a cellophane tape was pasted to the grid-form cuts and then peeled off, and the number of remaining cells among the 100 cells was measured. The residual ratio was calculated from the measurement results to evaluate the post-heating adhesion based on the following evaluation criteria.

### (Evaluation Criteria)

S: The residual ratio was 95% to 100%.
A: The residual ratio was 90% or higher but lower than 95%.
B: The residual ratio was 70% or higher but lower than 90%.
C: The residual ratio was 50% or higher but lower than 70%.
D: The residual ratio was 0% or higher but lower than 50%.

### Test of Antifouling Properties

The test sheets were each cut into a size of 70 mm × 150 mm and then maintained such that each test sheet had a surface temperature of 300°C, after which three drops of a simulated contaminant liquid (a mixture of acrylic resin and carbon black) were applied dropwise to each test sheet. After the simulated contaminant liquid was dried, each test sheet was cooled at room temperature (25°C). Thereafter, each test sheet was wiped with a piece of dry gauze, and the area ratio (residual ratio) of remaining dry matter (burnt matter such as soot) with respect to the area of the dried contaminant liquid was measured to evaluate the antifouling properties based on the following evaluation criteria.

### (Evaluation Criteria)

S: The residual ratio was 0% or lower.
A: The residual ratio was 1% or higher but lower than 5%.
B: The residual ratio was 5% or higher but lower than 10%.
C: The residual ratio was 10% or higher but lower than 30%.
D: The residual ratio was 30% or higher.

**[Table 9]**

| Table 9: Evaluation Results | | | |
|---|---|---|---|
| Test Sheet | Evaluation results | | |
| | Post-heating insulation | Post-heating adhesion | Antifouling properties |
| No.1 | B | A | B |
| No.2 | B | A | A |
| No.3 | A | A | A |
| No.4 | A | A | A |
| No.5 | A | A | A |
| No.6 | B | A | A |
| No.7 | B | A | B |
| No.8 | A | B | A |
| No.9 | A | B | A |
| No.10 | A | A | B |
| No.11 | A | A | A |
| No.12 | B | A | A |
| No.13 | A | A | A |
| No.14 | A | A | A |
| No.15 | A | A | A |
| No.16 | A | A | A |
| No.17 | B | A | A |
| No.18 | A | A | S |
| No.19 | A | A | S |
| No.20 | A | S | S |
| No.21 | A | A | S |
| No.22 | A | A | S |
| No.23 | A | S | A |
| No.24 | B | A | B |
| No.25 | B | A | A |
| No.26 | A | A | A |
| No.27 | A | A | A |
| No.28 | A | B | A |
| No.29 | A | B | A |
| No.30 | A | A | A |
| No.31 | A | A | A |
| No.32 | A | B | A |
| No.33 | A | A | A |
| No.34 | A | B | A |
| No.35 | A | S | A |
| No.36 | S | S | S |
| No.37 | S | S | S |
| No.38 | S | S | S |
| No.39 | A | S | A |
| No.40 | D | C | D |
| No.41 | D | C | D |
| No.42 | D | D | D |
| No.43 | D | C | C |
| No.44 | D | C | C |

The present invention has been described above in detail referring to concrete examples thereof; however, it is obvious to those skilled in the art that various modifications and changes can be made without departing from the scope of the present invention, as defined in the appended claims.

## Claims

1. A surface treatment agent, comprising:
a silicone resin (A) having an organopolysiloxane structure containing plural siloxane bonds and in which an organic group is bound to silicon (Si);
a compound (B) containing a metal element selected from the group consisting of titanium, platinum, rhodium and palladium; and
an aromatic hydrocarbon-based solvent (C),
wherein
(I) a content of the silicone resin (A) is in a range of 90% by mass to 99.9% by mass with respect to a total solid mass of the silicone resin (A) and the compound (B),
(II) a ratio (B_{M}/A_{M}) of a mass (B_{M}) of the compound (B) to a mass (A_{M}) of the silicone resin (A) is in a range of 0.001 to 0.111, and
(III) a content of the aromatic hydrocarbon-based solvent (C) is in a range of 40% by mass to 80% by mass with respect to a total mass of the surface treatment agent.

2. The surface treatment agent according to claim 1, further comprising a vinyl group-containing silane coupling agent and/or an epoxy group-containing silane coupling agent,
wherein a ratio (D_{M}/A_{M}) of a total mass (D_{M}) of the vinyl group-containing silane coupling agent and the epoxy group-containing silane coupling agent to the mass (A_{M}) is in a range of 0.005 to 0.251.

3. A method of producing a metal material comprising a surface-treated coating film, the method comprising:
the first step of contacting the surface treatment agent according to claim 1 or 2 on/over a surface of a metal material; and
the second step of drying the surface treatment agent contacted with the metal material and thereby forming a surface-treated coating film.

4. The method according to claim 3, further comprising, prior to the first step:
the step of contacting a base treatment agent, comprising an amino group-containing silane coupling agent, a polymer of the silane coupling agent or a copolymer formed with the polymer, on/over the surface of the metal material; and
the step of drying the base treatment agent contacted with the metal material and thereby forming a base coating.

5. A metal material comprising a surface-treated coating film obtained by the method according to claim 3 or 4,
wherein the surface-treated coating film has a film thickness in a range of 10 µm to 400 µm.

6. A metal material comprising a surface-treated coating film obtained by the method according to claim 4,
wherein
the surface-treated coating film has a film thickness in a range of 10 µm to 400 µm, and
a Si content in the base coating is in a range of 0.1 mg/m² to 50 mg/m² in terms of SiO₂ mass.

7. The metal material comprising a surface-treated coating film according to claims 5 or 6,
wherein the metal material is stainless steel.

## Patentansprüche

1. Oberflächenbehandlungsmittel, umfassend:
ein Silikonharz (A) mit einer Organopolysiloxanstruktur, die mehrere Siloxanbindungen enthält und in der eine organische Gruppe an Silizium (Si) gebunden ist;
eine Verbindung (B), die ein Metallelement enthält, ausgewählt aus der Gruppe bestehend aus Titan, Platin, Rhodium und Palladium; und
ein Lösungsmittel auf Basis aromatischer Kohlenwasserstoffe (C),
wobei
(I) ein Gehalt des Silikonharzes (A) in einem Bereich von 90 Massen-% bis 99,9 Massen-%, bezogen auf eine Gesamtfeststoffmasse des Silikonharzes (A) und der Verbindung (B), liegt,
(II) ein Verhältnis (B_{M}/A_{M}) einer Masse (BM) der Verbindung (B) zu einer Masse (A_{M}) des Silikonharzes (A) in einem Bereich von 0,001 bis 0,111 liegt, und
(III) ein Gehalt des Lösungsmittels auf Basis aromatischer Kohlenwasserstoffe (C) in einem Bereich von 40 Massen-% bis 80 Massen-%, bezogen auf eine Gesamtmasse des Oberflächenbehandlungsmittels, liegt.

2. Oberflächenbehandlungsmittel nach Anspruch 1, weiter umfassend ein vinylgruppenhaltiges Silankupplungsmittel und/oder ein epoxygruppenhaltiges Silankupplungsmittel,
wobei ein Verhältnis (D_{M}/A_{M}) einer Gesamtmasse (D_{M}) des vinylgruppenhaltigen Silankupplungsmittels und des epoxygruppenthaltigen Silankupplungsmittels zu der Masse (A_{M}) in einem Bereich von 0,005 bis 0,251 liegt.

3. Verfahren zur Herstellung eines Metallmaterials, das einen oberflächenbehandelten Beschichtungsfilm umfasst, wobei das Verfahren umfasst:
den ersten Schritt des Inkontaktbringens des Oberflächenbehandlungsmittels nach Anspruch 1 oder 2 auf/über eine Oberfläche eines Metallmaterials; und
den zweiten Schritt des Trocknens des mit dem Metallmaterial in Kontakt gebrachten Oberflächenbehandlungsmittels und des Bildens eines oberflächenbehandelten Beschichtungsfilms dadurch.

4. Verfahren nach Anspruch 3, weiter umfassend, vor dem ersten Schritt:
den Schritt des Inkontaktbringens eines Grundbehandlungsmittels, das ein aminogruppenhaltigen Silankupplungsmittel, ein Polymer des Silankupplungsmittels oder ein mit dem Polymer gebildetes Copolymer umfasst, auf/über die Oberfläche des Metallmaterials; und
den Schritt des Trocknens des mit dem Metallmaterial in Kontakt gebrachten Grundbehandlungsmittels und des Bildens einer Grundbeschichtung dadurch.

5. Metallmaterial, das einen oberflächenbehandelten Beschichtungsfilm umfasst, der durch das Verfahren nach Anspruch 3 oder 4 erhalten wird,
wobei der oberflächenbehandelte Beschichtungsfilm eine Filmdicke in einem Bereich von 10 µm bis 400 µm aufweist.

6. Metallmaterial, das einen oberflächenbehandelten Beschichtungsfilm umfasst, der durch das Verfahren nach Anspruch 4 erhalten wird,
wobei
der oberflächenbehandelte Beschichtungsfilm eine Filmdicke in einem Bereich von 10 µm bis 400 µm aufweist, und
ein Si-Gehalt in der Grundbeschichtung in einem Bereich von 0,1 mg/m² bis 50 mg/m² als SiO₂-Masse liegt.

7. Metallmaterial, das einen oberflächenbehandelten Beschichtungsfilm nach Anspruch 5 oder 6 umfasst,
wobei das Metallmaterial rostfreier Stahl ist.

## Revendications

1. Agent de traitement de surface, comprenant :
une résine de silicone (A) présentant une structure d'organopolysiloxane contenant une pluralité de liaisons siloxane et dans laquelle un groupe organique est lié au silicium (Si) ;
un composé (B) contenant un élément métallique sélectionné parmi le groupe constitué de titane, de platine, de rhodium et de palladium ; et
un solvant à base d'hydrocarbure aromatique (C),
dans lequel
(I) une teneur de la résine de silicone (A) est dans une plage de 90 % en masse à 99,9 % en masse par rapport à une masse solide totale de la résine de silicone (A) et du composé (B),
(II) un rapport (B_{M}/A_{M}) entre une masse (BM) du composé (B) et une masse (A_{M}) de la résine de silicone (A) est dans une plage de 0,001 à 0,111, et
(III) une teneur du solvant à base d'hydrocarbure aromatique (C) est dans une plage de 40 % en masse à 80 % en masse par rapport à une masse totale de l'agent de traitement de surface.

2. Agent de traitement de surface selon la revendication 1, comprenant en outre un agent de couplage au silane contenant un groupe vinyle et/ou un agent de couplage au silane contenant un groupe époxy,
dans lequel un rapport (D_{M}/A_{M}) entre une masse totale (D_{M}) de l'agent de couplage au silane contenant un groupe vinyle et de l'agent de couplage au silane contenant un groupe époxy et la masse (A_{M}) est dans une plage de 0,005 à 0,251.

3. Procédé de production d'un matériau métallique comprenant un film de revêtement traité en surface, le procédé comprenant :
la première étape consistant à mettre en contact l'agent de traitement de surface selon la revendication 1 ou la revendication 2 sur/au-dessus d'une surface d'un matériau métallique ; et
la seconde étape consistant à sécher l'agent de traitement de surface mis en contact avec le matériau métallique et, de ce fait, à former un film de revêtement traité en surface.

4. Procédé selon la revendication 3, comprenant en outre, avant la première étape :
l'étape consistant à mettre en contact un agent de traitement de base, comprenant un agent de couplage au silane contenant un groupe amino, un polymère de l'agent de couplage au silane ou un copolymère formé avec le polymère, sur/au-dessus de la surface du matériau métallique ; et
l'étape consistant à sécher l'agent de traitement de base mis en contact avec le matériau métallique et, de ce fait, à former un revêtement de base.

5. Matériau métallique comprenant un film de revêtement traité en surface obtenu par le procédé selon la revendication 3 ou la revendication 4,
dans lequel le film de revêtement traité en surface a une épaisseur de film dans une plage de 10 µm à 400 µm.

6. Matériau métallique comprenant un film de revêtement traité en surface obtenu par le procédé selon la revendication 4,
dans lequel
le film de revêtement traité en surface présente une épaisseur de film dans une plage de 10 µm à 400 µm, et
une teneur en Si dans le revêtement de base est dans une plage de 0,1 mg/m² à 50 mg/m² en termes de masse de SiO₂.

7. Matériau métallique comprenant un film de revêtement traité en surface selon les revendications 5 ou 6,
dans lequel le matériau métallique est de l'acier inoxydable.
